# EUROPEAN PATENT SPECIFICATION

(11) **EP 4 492 310 B1**
(45) Date of publication and mention of the grant of the patent: **01.10.2025**
(21) Application number: 24187306.6
(22) Date of filing: 09.07.2024
(51) Int. Cl.: G06Q 10/10, G06Q 10/0633

(54) **METHOD AND SYSTEM FOR PROVIDING TASK AUTOMATION SERVICE**
VERFAHREN UND SYSTEM ZUR BEREITSTELLUNG EINES AUFGABENAUTOMATISIERUNGSDIENSTES
PROCÉDÉ ET SYSTÈME DE FOURNITURE DE SERVICE D'AUTOMATISATION DE TÂCHES

(30) Priority: 10.07.2023 KR 20230088980; 31.10.2023 KR 20230148517
(43) Date of publication of application: 15.01.2025
(73) Proprietor: Samsung SDS Co., Ltd., Seoul 05510 (KR)
(72) Inventor: Lee, Seung Woo, 05510 SEOUL (KR); Kim, Hyo Young, 05510 SEOUL (KR)
(74) Representative: Glawe, Delfs, Moll

(56) References cited:
- US-A1- 2023 052 190
- AGOSTINELLI SIMONE ET AL: "Lecture Notes in Business Information Processing", vol. 393, 18 September 2020 (2020-09-18), DE, pages 116 - 131, XP055978423, ISSN: 1865-1348, Retrieved from the Internet <URL:https://www.diag.uniroma1.it/~marrella/papers/RPA_Forum_2020.pdf> DOI: 10.1007/978-3-030-58779-6_8
- LENO VOLODYMYR ET AL: "Robotic Process Mining: Vision and Challenges", BUSINESS, SPRINGER FACHMEDIEN WIESBADEN, WIESBADEN, vol. 63, no. 3, 24 March 2020 (2020-03-24), pages 301 - 314, XP037475363, ISSN: 2363-7005, [retrieved on 20200324], DOI: 10.1007/S12599-020-00641-4

## Description

### BACKGROUND

### 1. Field

The present disclosure relates to a method and system for providing a task automation service, and more particularly to, a method for providing a task consisting of input events of a plurality of users by using a robotic process automation (RPA) solution and a system to which the method is applied.

### 2. Description of the Related Art

Robotic Process Automation (RPA) technology refers to a technology that allows SW robot to copy and execute simple repetitive tasks performed on PCs by users, such as receiving and sending emails and data input to a system, in accordance with predetermined rules.

In case of the existing RPA solution, professional developers with a certain degree of IT knowledge and understanding of a target task have automated their tasks while writing and supplementing automation scripts. However, companies that have recently introduced RPA solution prefer a solution that allows field managers to simply write and automate their tasks, and even users who are not skilled in the RPA solution want to easily automate their tasks to efficiently perform them. Due to this change in the market, technologies of most RPA solutions are being developed with keywords such as Low Code and No Code, and among them, there is a method of minimizing the number of man-hours for automated script writing by performing recorded user events as they are. However, when recorded user events are used as automation scenarios as they are, there is a disadvantage of poor performance stability, which results in inevitably supplementing scripts, whereby there is a disadvantage of poor efficiency. US 2023/052190 A1 is an example of a prior art RPA solution.

Accordingly, a method of converting recorded user events and target objects into optimized scripts suitable for a target system and a technology capable of automating tasks based on stable high-level activities without separately supplementing scripts will be required.

### SUMMARY

An object of the present disclosure is to provide a method and system for automating a user's repeated various tasks of a high-level.

Another object of the present disclosure is to provide a method and system capable of generating an automated script suitable for a target system without having to specify a recording engine.

Other object of the present disclosure is to provide a method and system capable of generating a high-level activity by sequentially analyzing correlation of activities corresponding to a user's task.

The objects of the present disclosure are not limited to those mentioned above and additional objects of the present disclosure, which are not mentioned herein, will be clearly understood by those skilled in the art from the following description of the present disclosure.

According to the embodiment of the present disclosure, the system may automatically select object information corresponding to the user's input from object information collected through a recording engine without having to designate a recording engine corresponding to the user's direct input, whereby the user's convenience may be improved.

According to the embodiment of the present disclosure, an activity corresponding to a user's input may be generated for all target systems based on the selected object information and predefined pattern information, whereby the range of tasks that can be automated may be widened, and the user's convenience and satisfaction according to automation of various tasks may be increased.

According to the embodiment of the present disclosure, a plurality of activities may be grouped based on patterns corresponding to a plurality of repetitive tasks to generate a high-level activity, whereby the range of tasks that can be automated may be widened.

According to the embodiment of the present disclosure, an automation service of a task of a higher level than the related art may be provided to the user, so that the user's convenience and service satisfaction may be improved through quality improvement of the service.

The effects according to the embodiment of the present disclosure are not limited to those mentioned above, and more various effects are included in the following description of the present disclosure.

According to an aspect of an example embodiment of the disclosure, provided is a method for providing a task automation service, performed by at least one computing device. The method may include: collecting information on an object, in which a user's input occurs, by using a recording engine, generating an object information list for the object based on the information collected by the recording engine, determining first object information corresponding to the user's input based on a result of comparing a plurality of kinds of candidate object information included in the object information list, and automatically generating an activity corresponding to the user's input based on the first object information and predefined pattern information.

In some embodiments, the object information list may include user input information on the object and an object adjacent to the object.

In some embodiments, the object information list may include information on any one of an application, a system and a program, in which the user's input for the object is performed.

In some embodiments, the generating the object information list may include: determining whether each of object information collected by the recording engine includes essential information set in advance, and generating the object information list based on a result of the determination.

In some embodiments, the first object information may include a user input type for the object, a location of the object, a size of the object and process information on the object.

According to the invention, determining first object information corresponding to the user's input may include: selecting one kind of object information from the object information list, determining whether the user's input corresponding to the selected object information is a continuous input for the object, and determining the selected object information as candidate object information based on a result of the determination.

In some embodiments, whether the user's input is the continuous input for the object may be determined based on whether the objects, in which the user's input occurs, are the same.

In some embodiments, the determining the selected object information as the candidate object information may be performed only when it is determined that the user's input is the continuous input for the object and it is determined that it is not necessary to wait for a user's next input.

In some embodiments, whether it is necessary to wait for the user's next input may be determined based on a user's input type.

In some embodiments, the determining the selected object information as the candidate object information may include: determining the object information as candidate object information, based on a result of determining whether it is necessary to wait for a user's next input when it is determined that the user's input is not the continuous input for the object.

In some embodiments, the first object information corresponding to the user's input may be object information having a small object size among the plurality of kinds of candidate object information included in the object information list.

In some embodiments, the first object information corresponding to the user's input may be determined based on process information on the object among the plurality of kinds of candidate object information included in the object information list.

In some embodiments, the automatically generating the activity corresponding to the user's input may include: determining whether there is an activity of the same pattern as that of the activity, and automatically generating an activity corresponding to the pattern based on a result of the determination.

In some embodiments, the pattern may include a combination of one or more activities including a user's input type, a number of inputs and information on the object in which the user's input occurs.

According to an aspect of an example embodiment of the disclosure, provided is a system for providing a task automation service. The system may include: an object information collection module collecting information on an object, in which a user's input occurs, by using a recording engine and generating an object information list for the object based on the collected information, an object information determination module determining first object information corresponding to the user's input based on a result of comparing a plurality of kinds of candidate object information included in the object information list, and an activity generation module automatically generating an activity corresponding to the user's input based on the first object information and predefined pattern information.

In some embodiments, the first object information may include a user's input type for the object, a location of the object, a size of the object and process information on the object.

In some embodiments, the activity generation module may determine whether there is an activity of the same pattern as that of the activity, and automatically generates an activity corresponding to the pattern based on a result of the determination.

In some embodiments, the pattern may include a combination of one or more activities including a user's input type, a number of inputs and the information on the object in which the user's input occurs.

According to an aspect of an example embodiment of the disclosure, provided is a system for providing a task automation service. The system may include: a processor, and a memory storing an instruction, wherein, when the instruction is executed by the processor, the processor performs, an operation of collecting information on an object, in which a user's input occurs, by using a recording engine, an operation of generating an object information list for the object based on the information collected by the recording engine, an operation of determining first object information corresponding to the user's input based on a result of comparing a plurality of kinds of candidate object information included in the object information list, and an operation of automatically generating an activity corresponding to the user's input based on the first object information and predefined pattern information.

In some embodiments, the first object information may include a user's input type for the object, a location of the object, a size of the object and process information on the object.

### BRIEF DESCRIPTION OF THE DRAWINGS

The above and other aspects and features of the present disclosure will become more apparent by describing in detail exemplary embodiments thereof with reference to the attached drawings, in which:
FIGS. 1a and 1b are exemplary views illustrating a difference between a related art method for providing a task automation system and a method for providing a task automation service according to one embodiment of the present disclosure;
FIG. 2 is an exemplary view illustrating a method for providing a task automation service according to one embodiment of the present disclosure;
FIG. 3 is an exemplary view illustrating object information that may be referenced in some embodiments of the present disclosure;
FIG. 4 is an exemplary view illustrating some operations shown in FIG. 2;
FIG. 5 is a detailed flow chart illustrating some operations shown in FIG. 2;
FIG. 6 is an exemplary view illustrating some operations shown in FIG. 5;
FIG. 7 is an exemplary view illustrating some operations shown in FIG. 2;
FIG. 8 is an exemplary view illustrating an operation of generating an activity corresponding to a user's input by using object information, which may be referenced in some embodiments of the present disclosure;
FIG. 9 is an exemplary view illustrating some operations shown in FIG. 2;
FIGS. 10 and 11 are exemplary views illustrating an operation of generating a high-level activity based on a pattern of a repetitive task, which may be referenced in some embodiments of the present disclosure; and
FIG. 12 is a hardware schematic view illustrating a system for providing a task automation service according to some embodiments of the present disclosure.

### DETAILED DESCRIPTION

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In describing the present disclosure, when it is determined that the detailed description of the related well-known configuration or function may obscure the gist of the present disclosure, the detailed description thereof will be omitted.

Unless otherwise defined, terms used in the following embodiments (including technical and scientific terms) may be used in a meaning that can be commonly understood by those of ordinary skill in the art to which the present disclosure belongs, but this may vary depending on the intention of engineers working in the related field, precedents, and the emergence of new technologies. Terminology used in this disclosure is for describing the embodiments and is not intended to limit the scope of the disclosure.

Expressions in the singular number used in the following embodiments include plural concepts unless the context clearly indicates that the singular number is specified. Also, plural expressions include singular concepts unless clearly specified as plural in context.

In addition, terms such as first, second, A, B, (a), and (b) used in the following embodiments are only used to distinguish certain components from other components, and the terms does not limit the nature, sequence, or order of the components.

Hereinafter, embodiments of the present disclosure are described with reference to the accompanying drawings.

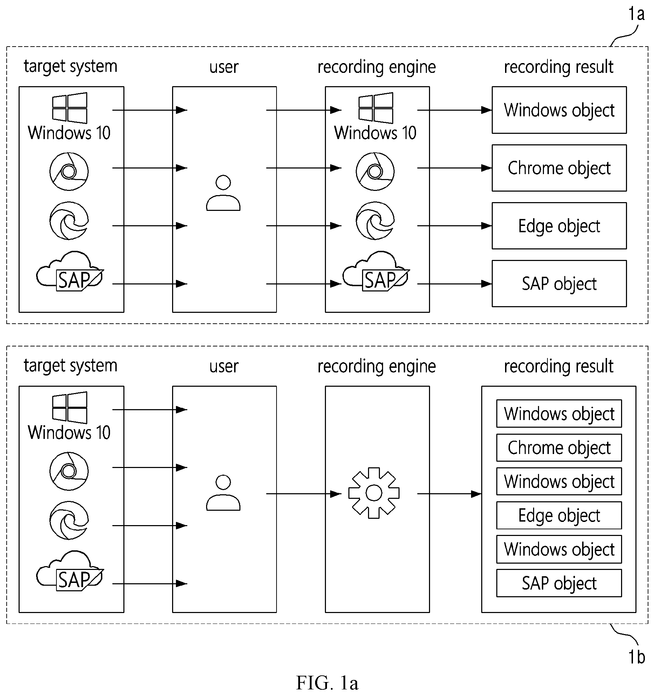

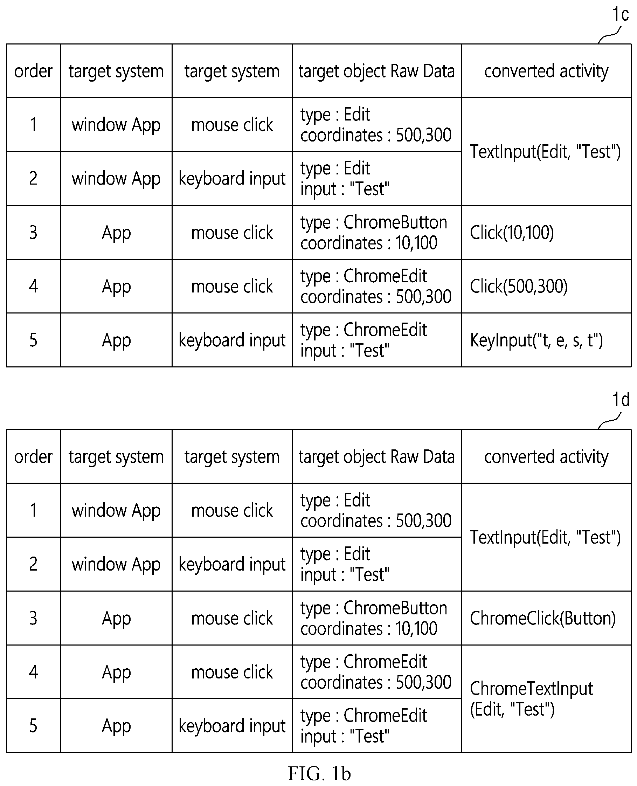

FIGS. 1a and 1b are exemplary views illustrating a difference between a related art method for providing a task automation system and a method for providing a task automation service according to one embodiment of the present disclosure,
In case of the related art Robotic Process Automation (RPA) solution, when a task automation service is provided using an automation script generated by recording a user's input event, the automation script may not operate depending on characteristics of a target system, an application, etc. even in case of the same user's input event. In order to prevent this, when recording the user's input event, it is required to determine the target system, the application, etc. and generate the automation script by using a recording engine corresponding thereto.

That is, there is a technical limitation in that a user should select and use a recording engine in accordance with a target system or application in which an input event occurs. Therefore, there is a need for a technology of allowing a user to select an automation script automatically generated using a recording engine corresponding to a target system or application in which a user's input event occurs without having to select the recording engine corresponding to the target system or application for the input event and provide a task automation service based on the selected automation script.

As illustrated in box 1a of FIG. 1a, in the related art RPA solution, the user may acquire a recording result of a user input object for each system by designating the recording engine corresponding to the target system and performing recording of the user's input event through the designated recording engine.

For example, when the user wants to automate a task consisting of inputs performed on a windows desktop, the user may designate a recording engine suitable for a Windows environment, record the user's input events for the windows desktop by using the designated recording engine and automate the task by using the recording result of the user's input events. In this case, when the user records the user's input event for the Windows desktop by using a recording engine corresponding to Chrome or Edge browser environment, since the user cannot recognize the user's input object and an object input event properly, the task automation may not work as intended.

As illustrated in box 1b of FIG. 1a, in the RPA solution according to one embodiment of the present disclosure, the user may collect information on an object in which the user's input occurs by recording the user's input event by using a recording engine without having to designate the recording engine corresponding to the target system, and may analyze the collected information. Afterwards, based on the analysis result of the collected information, the recording result corresponding to the target system in which the user's input occurs may be selected, and the task may be automated using the selected result.

In summary, in case of the related art RPA solution, the user has to directly designate the recording engine corresponding to the input target system. However, in case of the RPA solution according to the present disclosure, the target system corresponding to the user's input may be automatically selected based on the object information collected by the recording engine, and an activity may be generated using the object information corresponding to the selected target system, whereby the user's convenience and satisfaction may be improved.

Referring to Table 1c of FIG. 1b, in the related art RPA solution, a high-level activity may be generated only for user events in the window environment among user events (e.g., mouse click, keyboard input) on the target system. In this case, the high-level activity may mean one activity that may be generated by grouping a plurality of user events into one. On the contrary, a low-level activity may mean one activity generated for one user event.

That is, as illustrated in Table 1c, in the related art RPA solution, a mouse click input for the user's coordinates (500, 300) and the user's "Text" keyboard input in the Windows environment may be grouped and then converted into one activity TextInput (Edit, "Test"). However, a plurality of mouse click inputs and keyboard inputs of the user in a chrome environment cannot be converted into one activity by grouping.

On the other hand, referring to Table 1d of FIG. 1b, in the RPA solution according to some embodiments of the present disclosure, a high-level activity may be generated for user events (e.g., mouse click, keyboard input) on all target systems. That is, as illustrated in Table 1d, in the RPA solution according to some embodiments of the present disclosure, a mouse click input for the user's coordinates (500, 300) and the user's "Text" keyboard input in the chrome environment may be grouped and then converted into one activity ChromeTextInput(Edit, "Test").

In summary, in the related art RPA solution, the high-level activity (e.g., automation script) may be generated for user events in a specific system environment. However, in the RPA solution according to the present disclosure, a high-level activity may be generated for user events in all system environments, so that the range of tasks that can be automated may be widened, and the level of the automated task may be improved. Therefore, the user's satisfaction and convenience may be effectively improved.

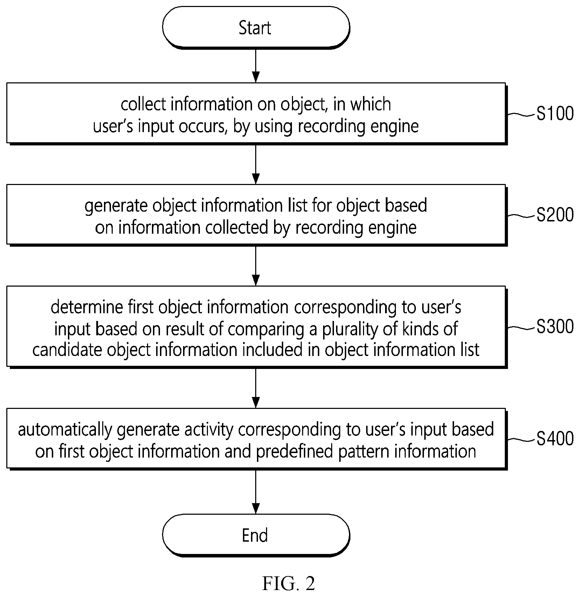

FIG. 2 is an exemplary view illustrating a method for providing a task automation service according to one embodiment of the present disclosure. However, this is only an example embodiment for achieving the object of the present disclosure, and some steps may be added or deleted as necessary.

For reference, FIG. 2 illustrates steps/operations of a method for providing a task automation service, which are performed by a service server of the RPA solution. Therefore, in the following descriptions, when a subject of a specific step/operation is omitted, it may be understood that the specific step/operation is performed by the service server.

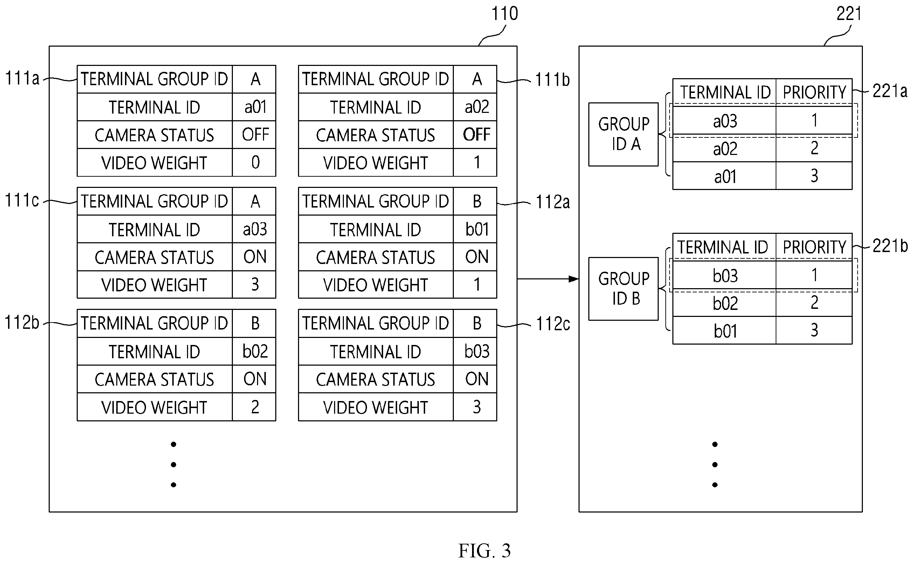

Meanwhile, the service server may include an object information collection module, an object information determination module and an activity generation module. In this case, the object information collection module may collect information on an object in which a user's input occurs by using the recording engine, and may generate an object information list for the object based on the collected information. Also, the object information determination module may determine first object information corresponding to the user's input based on the result of comparing a plurality of candidate object information included in the object information list. Furthermore, the activity generation module may automatically generate an activity corresponding to the user's input based on the first object information and previously defined pattern information. A detailed description of operations/steps performed in each module will be given later with reference to FIGS. 3 to 11.

As illustrated in FIG. 2, the method for providing a task automation service according to one embodiment of the present disclosure may start in step S100 of collecting information on an object, in which the user's input occurs, using the recording engine by the service server. In this case, the recording engine may record a plurality of target systems, applications and programs (e.g., Excel, PowerPoint, Windows, Chrome, etc.). That is, the recording engine may include various recording modules such as an Excel recording module, a PowerPoint recording module, a window recording module and a chrome recording module.

In addition, the user's input may include various types of inputs such as a keyboard input, a mouse input and a touch input. However, in the present disclosure, in order to provide convenience of understanding, it is assumed that the user's input is one of the keyboard input and the mouse input.

In step S200, the service server may generate an object information list for the object based on the information collected by the recording engine through step S100. In this case, the object information list may be composed of a plurality of kinds of object information including information on any one of an application, a program and a system, in which the user's input for the object is performed. The plurality of kinds of object information may mean information on each of the plurality of obj ects, or may mean a plurality of kinds of information on the same object. In addition, the object information list may mean a list of object information executable through the RPA solution or object information capable of being subjected to activity conversion through the RPA solution.

Furthermore, the step S200 of generating an object information list for an object based on the information collected by the recording engine may include a step of determining whether essential information set in advance is included in each of the object information collected by the recording engine and a step of generating an object information list based on the result of the determination.

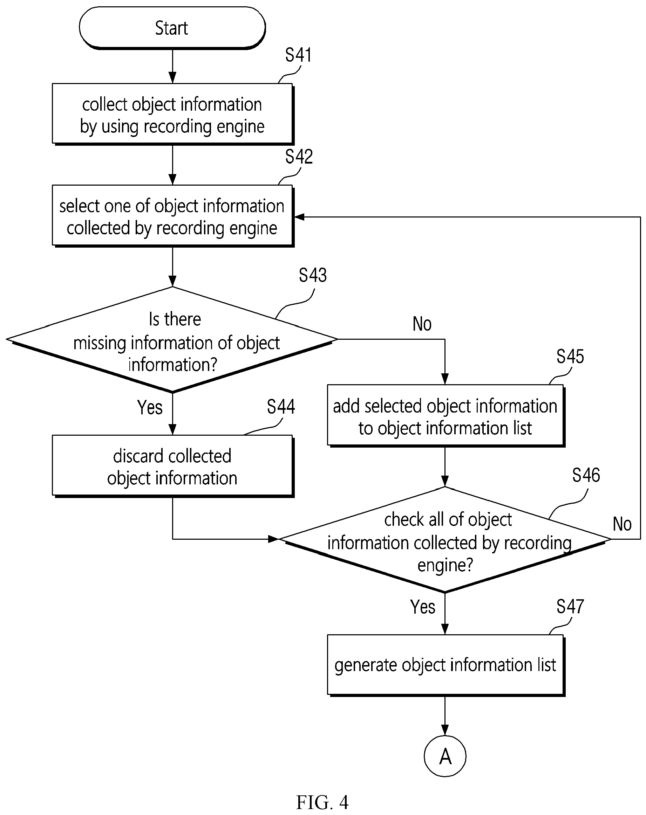

That is, the object information list refers to a set of object information collected by the recording engine, and the object information list may include object information capable of performing activity conversion through the RPA solution, information on the target system, user input information and the like. Meanwhile, the object information list and a detailed process of generating the object information list will be described later with reference to FIGS. 3 and 4.

In step S300, the service server may compare a plurality of kinds of candidate object information included in the object information list generated through step S200 and determine first object information corresponding to the user's input based on the result of the comparison. That is, candidate object information having a high possibility of being object information on the user's input may be first selected from the object information list, and first object information corresponding to the user's input may be finally determined based on the result of comparing the selected candidate object information with each other. In this case, the first object information may include a type of user input for the object, a location of the object, a size of the object and process information on the object.

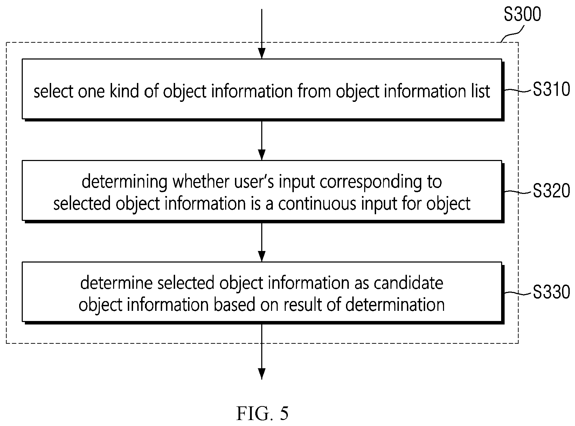

Meanwhile, although not shown in FIG. 2, in the process of selecting a plurality of kinds of candidate object information, a process of determining whether a user's input for an object is a continuous input may be performed. A detailed description related to this will be given later with reference to FIGS. 5 to 7.

In step S400, the service server may automatically generate an activity corresponding to the user's input based on the first object information determined through step S300 and the predefined pattern information. In this case, the pattern may be composed of a combination of one or more activities including the user's input type, the number of inputs and information on an object in which the user's input occurs. For example, a case that a keyboard input of "Ctrl + c" and a mouse input for the same area are repeated n times or more may be designated as one pattern. Also, the activity generated through step S400 may mean a high-level activity corresponding to a plurality of input events of the user, not a low-level activity for one input event of the user.

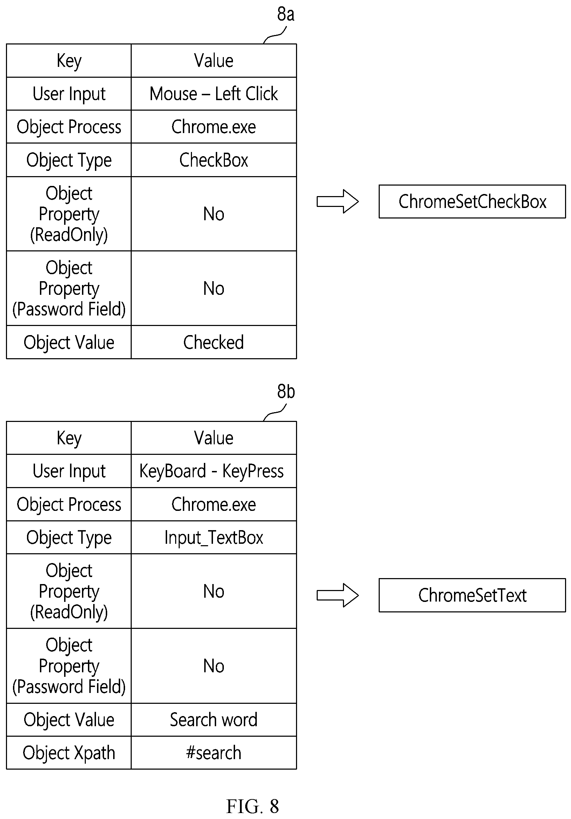

In addition, the step S400 of automatically generating an activity corresponding to the user's input may include a step of determining whether an activity having the same pattern as the above activity exists and a step of automatically generating an activity corresponding to the pattern based on the result of the determination. A detailed description related to this will be given later with reference to FIGS. 8 to 11.

In summary, the object information list may be generated based on the information on the object, in which the user's input occurs, collected using the recording engine, and object information corresponding to the user's input may be automatically selected by comparing some object information included in the object information list.

Therefore, the system may automatically select object information corresponding to the user's input from the object information collected through the recording engine without having to designate the recording engine corresponding to the user's direct input by the user, whereby the user's convenience may be improved.

Also, the activity corresponding to the user's input may be generated for all target systems based on the selected object information and the predefined pattern information, whereby the range of tasks that can be automated may be widened, and the user's convenience and satisfaction according to automation of various tasks may be increased.

Hereinafter, the process of generating an object information list by collecting object information will be described in more detail with reference to FIGS. 3 and 4.

FIG. 3 is an exemplary view illustrating object information that may be referenced in some embodiments of the present disclosure.

As illustrated in FIG. 3, a user's input event for a target object 3a may occur, and the user input event for the target object 3a may be recorded using the recording engine. In this case, when recording is performed using a window recording module, window information 3b for the target object 3a may be acquired. In this case, the window information 3b may include information that cannot be subjected to activity conversion through the RPA solution or unnecessary information during an activity conversion process. Therefore, window object information 3c for the target object 3a may be generated by deleting and editing the unnecessary information.

Likewise, when the user input event is recorded using the chrome recording module, the service server may acquire chrome information on the target object 3a, and may generate chrome object information 3d on the target object 3a by deleting and editing the information that cannot be subjected to activity conversion through the RPA solution or the unnecessary information during the activity conversion process.

Afterwards, an object information list composed of system object information generated based on the information collected through other recording modules, including the window object information 3c and the chrome object information 3d, may be generated.

Therefore, all kinds of information on the object may be collected through the recording engine, and only information (i.e., executable information) that may be subjected to activity conversion through the RPA solution may be extracted to generate object information, whereby errors that may occur in a subsequent activity conversion process may be minimized, and system resources consumed in the activity conversion process through comparison between the object information may be saved.

Meanwhile, referring to the window object information 3c illustrated in FIG. 3, it may be checked hat the user input for the target object 3a includes information such as a left-click input of a mouse, process information 1222 (Chrome.exe) on the target object 3a and name information of the object ("item check box"). In addition, referring to the chrome object information 3d, it may be checked that the user input for the target object 3a includes information such as information that is the left-click input of the mouse, process information (Chrome.exe) on the target object 3a and type information (Input) of the object.

In this case, since the activity conversion process for the object information collected for each target system may be different, items (User Input, ProcessId, Help Text, IsEnable,..., ControlType) of the window object information 3c and items (User Input, Object Process, URL, Type,..., Xpath) of the chrome object information 3d may be different. In addition, it should be noted that the object information illustrated in FIG. 3 is only an example, and a plurality of kinds of object information may be generated depending on the user's input type, and object information may include information classified into various items depending on functions and performance, which are supported by the RPA solution.

FIG. 4 is an exemplary view illustrating some operations shown in FIG. 2. In more detail, FIG. 4 is an exemplary view illustrating a detailed process in which the object information collection module selects some object information from object information collected by a recording engine to generate an object information list. However, this is only an example embodiment for achieving the object of the present disclosure, and some steps may be added or deleted as necessary.

As illustrated in FIG. 4, the process of generating an object information list by using the information collected through the recording engine by the object information collection module may start in step S41 of collecting object information by using the recording engine.

In step S42, the object information collection module may select any one of a plurality of kinds of object information collected by the recording engine. It may be determined whether there is missing information among the object information selected in step S43, and when it is determined that there is missing information, the selected object information may be discarded through step S44. Also, when it is determined that there is no missing information, the selected object information may be added to the object information list through step S45. In this case, the missing information may mean essential information set in advance.

Afterwards, in step 46, it may be determined whether all of the plurality of kinds of object information collected by the recording engine have been checked, and when unchecked object information exists, the current step returns to the step S42, so that the unchecked object information may be selected, and the processes of the steps S43 to S45 may be performed. When all of the plurality of kinds of object information collected by the recording engine are checked, the object information list may be finally generated in step S47.

For example, when the user's input event is a selection input for a specific cell on an Excel program, the object information collected through the Excel recording module and the object information collected through the Windows recording module may include essential information, but the object information collected through the Chrome recording module and the PowerPoint recording module may not include essential information. In addition, the object information collected through some recording modules may include information that cannot be subjected to activity conversion through the RPA solution.

At this time, the object information list may be generated in such a manner that among the object information collected using the recording engine, the object information collected through the chrome recording module, the PowerPoint recording module, etc., in which essential information is omitted, may be discarded, and the object information collected through the Excel recording module and the window recording module may be added to the list.

In summary, the object information collection module may finally generate an object information list to be input to the object information determination module by discarding object information, in which missing information exists, among the plurality of kinds of object information collected by the recording engine and adding only the object information including essential information to the object information list.

Therefore, the object information in which essential information is missed, object information that is difficult to be subjected to activity conversion through the RPA solution, etc. are discarded, and the object information list is generated based on object information that is highly related to the user's input event, whereby the possibility that object information corresponding to the user's input is determined may be increased.

Meanwhile, the object information list described with reference to FIGS. 3 and 4 may be composed of a plurality of kinds of object information including user input information on an object adjacent to a target object as well as the user's input for the target object. That is, both user input information on a specific object and user input information on an object in an area adjacent to a specific object are collected and an object information list is generated based on the collected information, whereby object information corresponding to the user input may be determined more exactly.

Hereinafter, a process of determining object information corresponding to a user's input by the object information determination module according to some embodiments of the present disclosure will be described in detail with reference to FIGS. 5 to 7. For reference, FIGS. 5 to 8 illustrate steps/operations of a method for providing a task automation service, which are performed by the object information determination module. Therefore, in the following descriptions, when a subject of a specific step/operation is omitted, it may be understood that the specific step/operation is performed by the object information determination module.

First, a process of selecting candidate object information from a plurality of kinds of object information included in the object information list will be described with reference to FIG. 5.

FIG. 5 is a detailed flow chart illustrating some operations shown in FIG. 2. However, this is only an example embodiment for achieving the object of the present disclosure, and some steps may be added or deleted as necessary.

As illustrated in FIG. 5, the step S300 of determining first object information corresponding to the user's input based on the result of comparing the plurality of kinds of candidate object information included in the object information list may include step S310 of selecting one kind of object information from the object information list by the object information determination module, step S320 of determining whether the user's input corresponding to the object information selected through the step S310 is a continuous input for the object and step S330 of determining the selected object information as candidate object information based on the result of the determination.

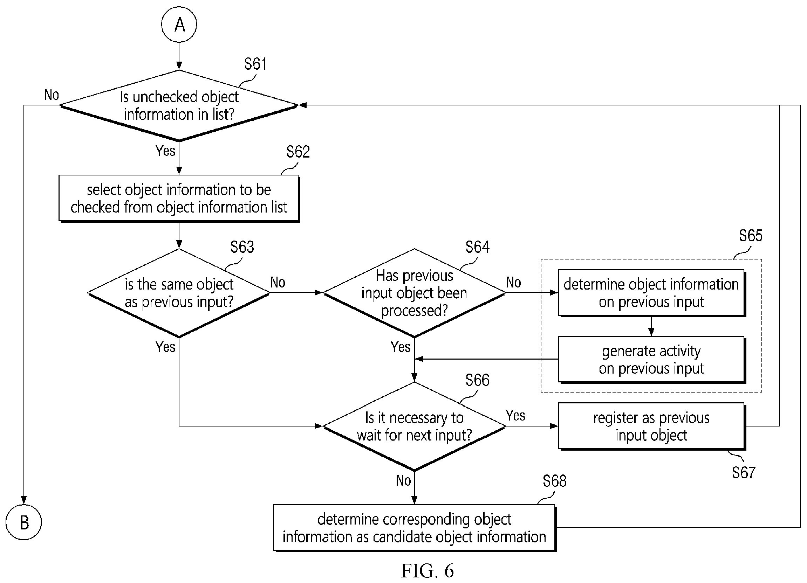

In this case, the step S330 of determining the selected object information as candidate object information may be performed only when it is determined that the user's input is a continuous input for the object and it is determined that the it is not necessary to wait for the user's next input. Meanwhile, when it is determined that the user's input is not a continuous input for the object, an activity corresponding to the user's previous input may be generated through a separate process. A detailed description related to this will be given later with reference to FIG. 6.

Referring back to FIG. 5, whether the user's input is a continuous input for the object may be determined based on whether the objects in which the user's input occurs are the same. For example, assuming that there are a first object receiving an ID and a second object receiving a password, when a user inputs a text to the first object by using a keyboard and selects the first object by using a mouse, it may be determined that the inputs are continuous inputs for the object. In addition, when the user selects the first object by using the mouse and selects the second object by using the mouse, it may be determined that the inputs are not continuous inputs for the object.

Meanwhile, the user's plurality of inputs for the object may be determined as continuous inputs only when the first input and the second input occur within a preset time, or may be determined based on the order of inputs received through an external device (e.g. keyboard, mouse) regardless of the time limit.

Hereinafter, steps/operations shown in FIG. 5 will be described in detail with reference to FIG. 6.

FIG. 6 is an exemplary view illustrating some operations shown in FIG. 5.

As illustrated in FIG. 6, in step S61, it may be determined whether unchecked object information exists among a plurality of kinds of object information included in the object information list. In other words, it may be understood that a process of checking a plurality of kinds of object information included in the object information list starts in consideration of whether the user's input for an object is a continuous input.

In step S62, object information to be checked may be selected from the object information list. In step S63, it may be determined whether the object in which the user's input occurs is the same as the object in which the user's previous input has occurred. That is, it may be determined whether a user input event has continuously occurred for the same object. In this case, when a user input for the same area occurs based on a previously designated or distinguished area, it may be determined that a user input for the same object has occurred, and the determination may be irrespective of the user's input type (e.g. keyboard, mouse).

When it is determined that the user's input is not a continuous input for the same object, in step S64, it may be determined whether the object in which the user's previous input has occurred has been processed. In other words, it may be determined whether a process of determining object information corresponding to the user's previous input and generating an activity based on the determined object information has been performed.

First, when the object in which the user's previous input occurs is not processed, in step S65, a process of generating an activity corresponding to the user's previous input may be performed, and after the object in which the user's previous input has occurred is processed, the object in which the user's current input occurs may be processed.

Next, when the object in which the user's previous input has occurred is processed or when it is determined in step S63 that the user's input is a continuous input for the same object, it may be determined in step S66 whether to wait for the user's next input. For example, when the user continuously performs the keyboard input for the same object, since the user's next input is likely to be a keyboard, it may be determined to wait for the user's next input. In addition, when the user performs the keyboard input for the same object and continuously performs the mouse input, it may be determined that it is not necessary to wait for the user's next input. However, it should be noted that the criterion for determining whether to wait for the user's next input is not limited to the above-described example. That is, the criterion for determining whether to wait for the user's input for a specific object may vary depending on circumstances, and the criterion may be defined and managed in advance.

When it is determined through step S66 that it is necessary to wait for the user's next input based on the predefined criterion, step S67 of registering object information (i.e., object information on the user's current input) to be checked as object information on the user's previous input may be performed. In this case, when object information on the user's current input is registered as object information on the user's previous input, the registered object information may be used in a process of determining whether the user's continuous input (i.e., next input and current input) is for the same object in the process of checking object information on the user's next input when the user's next input event occurs.

On the contrary, when it is determined through step S66 that it is not necessary to wait for the user's next input, based on the predefined criterion, step S68 of determining object information (object information on the user's current input) to be checked as candidate object information may be performed.

As described above, candidate object information may be determined through a process of sequentially checking a plurality of kinds of object information included in the object information list one by one, and when all of the plurality of kinds of object information included in the object information list are checked, a process of determining first object information corresponding to the user's input may be performed.

In summary, before the first object information corresponding to the user's input is determined through comparison between the candidate object information included in the object information list, the process of selecting candidate object information from the plurality of kinds of object information may be performed based on the result of determining whether the user input is a continuous input for an object. In this case, the determination as to whether the user's input is a continuous input for an object may be performed based on whether the same input for a previously set area has occurred. Also, when the user's input is a continuous input, whether to wait for the user's next input may be determined based on the user's input type.

Therefore, the task automation service may be provided based on the object information for continuous inputs, such as the user's first input for the object, the user's second input prior to the first input and the user's third input after the first input, without being provided based on only object information on the user's first input for the object, whereby accuracy in the automated task may be improved, and the range of the task that can be automated may be widened.

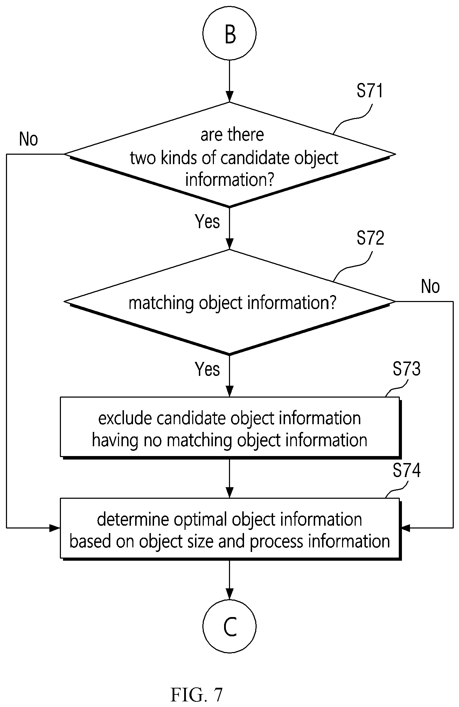

FIG. 7 is an exemplary view illustrating some operations shown in FIG. 2. In more detail, FIG. 7 is an exemplary view illustrating operations performed when all of a plurality of kinds of object information included in an object information list are checked, as subsequent processes of the operations shown in FIG. 6.

As illustrated in FIG. 7, in step S71, whether the plurality of kinds of candidate object information exists may be determined. First, when it is determined that only one candidate object information exists, the candidate object information may be determined as optimal object information (i.e. first object information). Next, when it is determined that two or more kinds of candidate object information exist, step S72 of comparing the two or more kinds of candidate object information and determining whether the two or more kinds of candidate object information match with each other may be performed.

As a result of comparing the two or more kinds of candidate object information through the step S72, when there is no candidate object information having matching object information, optimal object information (i.e. first object information) may be determined based on an object size of the candidate object information and process information of the object.

Next, as a result of comparing the two or more kinds of candidate object information, when both the candidate object information having matching object information and the candidate object information having no matching object information exist, step S73 of excluding the candidate object information having no matching object information may be performed. Afterwards, optimal object information (i.e. first object information) may be determined based on information such as a size of an object and process information of an object among the candidate object information having matching information, through step S74.

In more detail, as a result of comparing the plurality of kinds of candidate object information included in the object information list, candidate object information having a smaller object size may be determined as the first object information. Also, as a result of comparing the plurality of kinds of candidate object information included in the object information list, the first object information may be determined by referring to data such as system and application described in the process information of the object.

For example, when the user wants to automate the task of selecting a first icon from the Excel program, the first candidate object information having a smaller object size may be determined as the first object information corresponding to the user's first icon selection input based on the comparison result between size information of an object included in the first candidate object information collected through the Excel recording module and size information of an object included in the second candidate object information collected through the window recording module.

Meanwhile, the first object information may mean optimal object information corresponding to the user's input. That is, it may be understood that the first object information means object information collected through the recording module of the target system in which the user's input has occurred.

In summary, the plurality of kinds of object information included in the object information list are compared with each other to select matching object information (e.g., value values for user input items, value values for object value items, etc. of Tables 3c and 3d of a key and value pair exemplified in FIG. 3), and optimal object information may be determined by additionally considering object size information, process information, etc. among the selected object information.

Therefore, final object information may be determined by excluding some kinds of object information through comparison between the object information collected by the recording engine and considering the size of the object and the process information from the object information that is not excluded, whereby accuracy of determining object information corresponding to the user's input may be improved, and occurrence of errors in the task automation process may be minimized.

Hereinafter, a process of generating an activity corresponding to a user's input based on optimal object information corresponding to the user's input and pattern information will be described with reference to FIGS. 8 to 11.

FIG. 8 is an exemplary view illustrating an operation of generating an activity corresponding to a user's input by using object information, which may be referenced in some embodiments of the present disclosure. In more detail, object information collected through the chrome recording module for the user's input in a chrome environment and an activity generated to correspond thereto are illustrated in FIG. 80.

As illustrated in FIG. 8, object information 8a determined through the process described with reference to FIGS. 5 to 7 may be object information collected through the chrome recording module. In this case, an activity ChromeSetCheckBox corresponding to the first object information 8a may be generated based on a mapping table in which the object information and the activity are mapped.

That is, the object information 8a in which User Input for an object is "mouse left input", an object type is "CheckBox Type", an object attribute is not "ReadOnly" or "Password Field" and an object value is "Checked" may be converted into the activity of "ChromeSetCheckBox" (i.e., check box click in the Chrome browser) based on an inquiry result of a predefined mapping table.

Likewise, object information 8b, which includes user input of "keyboard input", an object type of "Input TextBox", an object attribute of "Not ReadOnly" or "Not PasswordField", an object value of "Searchword", etc., may be converted into an activity of "ChromeSetText" (i.e., search word input to a search box in the Chrome browser) based on the inquiry result of the predefined mapping table.

Meanwhile, according to the present disclosure, a low-level activity corresponding to one user input for an object may be generated, but a high-level activity corresponding to a plurality of user inputs repeatedly performed for an object may be generated.

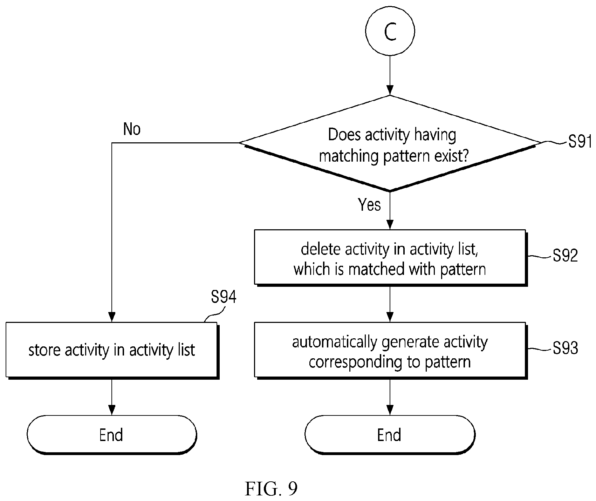

Hereinafter, a process of generating a high-level activity will be described with reference to FIGS. 9 to 11.

FIG. 9 is an exemplary view illustrating some operations shown in FIG. 2. In more detail, FIG. 9 is an exemplary view illustrating operations performed after the step S74 of determining the optimal object information shown in FIG. 7. However, this is only an example embodiment for achieving the object of the present disclosure and some steps may be added or deleted as necessary.

As illustrated in FIG. 9, in step S91, it may be determined whether an activity having a matching pattern exists in an activity list stored in a database. In this case, the pattern may be information defined in advance as a combination of the user's input type, the number of inputs and object information in which the user's input occurs. For example, a case that a keyboard input of "Ctrl+c" for a first area and a mouse input are repeated n times or more may be designated as one pattern. Also, a case that a mouse selection input for a second area and a mouse input for a third area generated through the selection input are repeated n times or more may be designated as one pattern.

That is, after the activity corresponding to the first object information is converted based on the finally determined first object information, when there are no activities matched with the previously stored pattern by referring to previous activities, in step S94, the activity corresponding to the first object information may be stored in the activity list. In addition, when there are activities matched with the previously stored pattern, in step S92, one or more activities constituting the previously stored pattern may be deleted from the activity list. Afterwards, in step S93, the activity corresponding to the pattern may be stored in the activity list.

For example, when an activity of entering an "Enter" key three times is defined as a first pattern and an "Enter" keyboard input is performed once, an activity of entering the "Enter" key once and an activity of entering the "Enter" key twice may be generated and stored in the activity list. Afterwards, when the "Enter" keyboard input is performed three times, an activity of entering the "Enter" key matched with the previously stored first pattern three times exists, the activity of entering the "Enter" key once and the activity of entering the "Enter" key twice may be deleted from the activity list, and the activity of entering the "Enter" key three times may be stored in the activity list.

Meanwhile, a process of converting a low-level activity into a high-level activity based on a predefined pattern is illustrated in FIG. 9, but the high-level activity is not limited to one activity generated by grouping a plurality of low-level activities. That is, different levels of activities may be generated for each object by using information of the object input by the user even in case of the same user input.

For example, a level of an activity generated based on the user's keyboard input for the first object and a level of an activity generated based on the user's keyboard input for the second object may be different from each other. The keyboard input for the first object may be determined to be a simple keyboard input so that a low-level activity may be generated, and the keyboard input for the second object may be determined to be a text input so that a high-level activity may be generated.

In addition, when the object input by the user is an area where a password is input, the keyboard input to the area is not processed as a simple keyboard input or text input, but determined as an input of important information, whereby a high-level activity (e.g., CredentialSetText) may be generated.

In summary, a high-level activity corresponding to the user's input may be generated based on the predefined pattern. Therefore, the high-level activity may be generated based on the pattern composed of a plurality of activities without limitation to the generation of the low-level activity based on the object information obtained by recording one user input, whereby the range of tasks that may be automated may be widened. In addition, the user's convenience and usability may be improved through quality improvement of the task automation service.

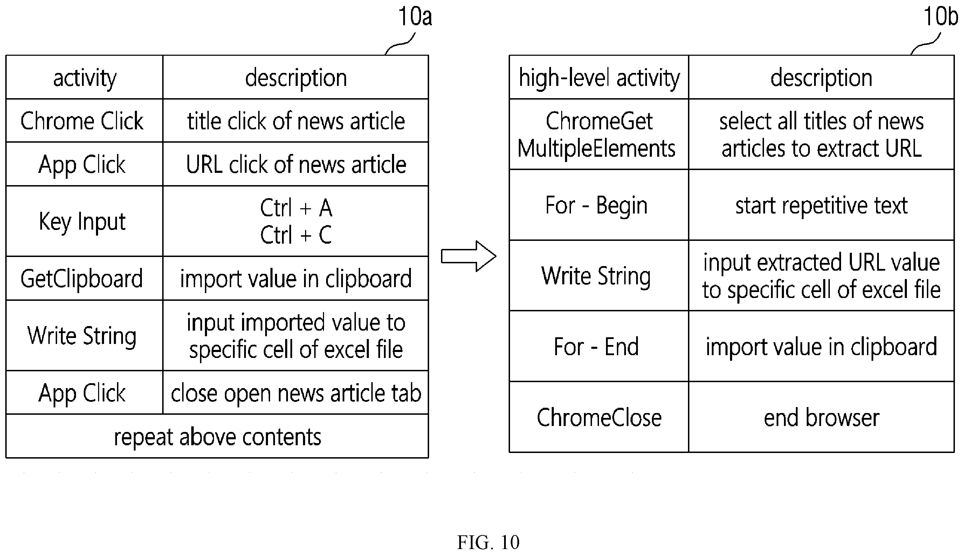

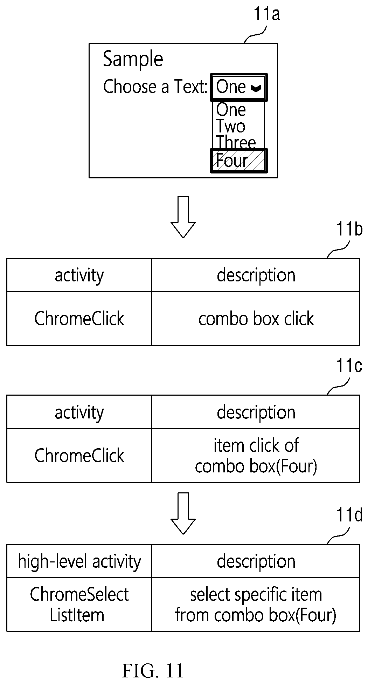

FIGS. 10 and 11 are exemplary views illustrating an operation of generating a high-level activity based on a pattern of a repetitive task, which may be referenced in some embodiments of the present disclosure.

First, a method for providing a task automation service that extracts a title of an article from a specific website will be described with reference to FIG. 10.

The user may repeatedly perform a task of inputting a search word on a specific website, copying URLs of news articles output as a result of the search and inputting them into Excel. In this case, the task may be performed by repetitive execution of a mouse click input for a title of a news article, a keyboard input for copying URL of the news article, a keyboard input for pasting the copied URL to a specific cell of Excel file and a mouse input for closing a browser of the news article.

Referring to box 10a of FIG. 10, as the user repeats the task, activities corresponding to a plurality of user inputs constituting the repetitive task may be repeatedly generated. In this case, the repetitive task may be converted into a first activity of high-level based on the predefined pattern.

In other words, referring to box 10b of FIG. 10, a high-level activity of "ChromeGetMultiple Elements", which extracts URL by selecting all the titles of news articles, may be generated based on a first pattern consisting of an activity of "Chrome Click" for clicking a title of a news article and an activity of "App Click" for clicking URL of the news article. In addition, a high-level activity of "For-Begin" for starting a repetitive text, "Write String" for entering a value copied in a specific cell of a cell file, "For-End" for ending the repetitive text when the copied value in a clipboard is imported and "ChromeClose" for ending a browser open on a screen may be generated based on a second pattern in which an activity of "Key Input" for selecting and copying all URLs, an activity of "Write String" for entering the copied values into a specific cell of an Excel file and an activity of "Appl Click" for closing a tab of a news article open on a screen are repeated.

Next, a method for providing a task automation service that selects a specific item from a combo box of a specific website will be described with reference to FIG. 11.

As illustrated in box 11a of FIG. 11, the user may perform a task of selecting a specific value by performing two clicks on a combo box of a specific website. In this case, the task may be performed by repetitive execution of a mouse click input to the combo box of the website and a mouse click input to a specific item inside the combo box.

Referring to box 11b and box 11c of FIG. 11, as the user performs the task of clicking the combo box and clicking one option from a list displayed by the click, activities corresponding to a plurality of user inputs (e.g., clicks) constituting the task may be generated respectively. In this case, the task may be converted into a first activity of high-level based on the predefined pattern.

That is, as illustrated in box 11d of FIG. 11, a high-level activity of "ChromeSelectListItem" for selecting a specific item (e.g., "Four" item) from the combo box may be generated based on the first pattern consisting of the activity of "ChromeClick" for clicking the combo box in the specific web page and the activity of "ChromeClick" for clicking the specific item (e.g., "Four" item) in the combo box.

In summary, the high-level activity may be generated by grouping activities that are repeated based on pattern information defined in advance for the task performed by the user.

Therefore, the high-level activity may be generated by grouping the plurality of activities based on the predefined pattern, so that the range of tasks that can be automated may be effectively widened. In addition, the automation services of various tasks may be provided to the user, so that user's convenience and service satisfaction may be improved through quality improvement of the services.

The method for providing a task automation service according to some embodiments of the present disclosure has been described with reference to FIGS. 1 to 11. According to the method for providing a task automation service according to some embodiments of the present disclosure, the object information list may be generated based on the information on an object, in which the user's input occurs, collected using the recording engine, and the object information corresponding to the user's input may be automatically selected through comparison between some kinds of object information included in the object information list.

Therefore, unlike the existing RPA solution, the system may automatically select object information corresponding to the user's input from the object information collected through the recording engine without having to designate a recording engine corresponding to the user's direct input, thereby improving user convenience.

In addition, the activities corresponding to the user's input may be generated for all target systems based on the selected object information and the predefined pattern information, whereby the range of tasks that can be automated may be widened, and the user's convenience and satisfaction due to automation of various tasks may be increased.

Furthermore, the high-level activity may be generated by grouping activities that are repeated based on the pattern information defined in advance for the user's repetitive task. Therefore, the high-level activity may be generated by grouping the plurality of activities based on the patterns corresponding to the plurality of repetitive tasks, so that the range of tasks that can be automated may be effectively widened. In addition, the automation services of various tasks may be provided to the user, so that the user's convenience and service satisfaction may be improved through quality improvement of the services.

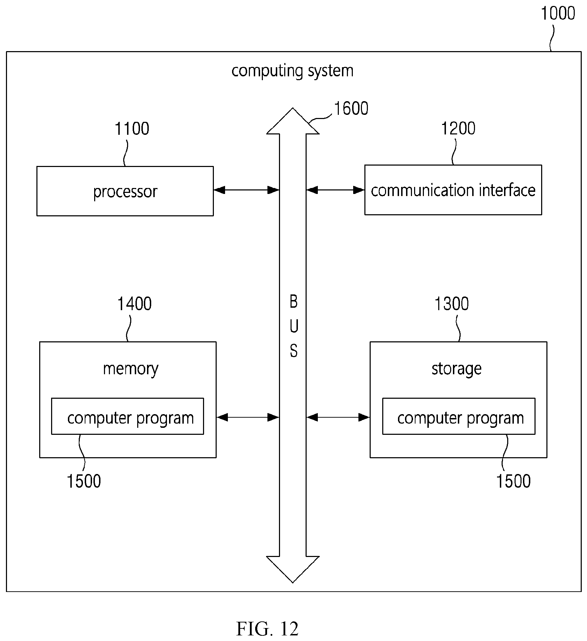

FIG. 12 is a hardware schematic view illustrating a system for providing a task automation service according to some embodiments of the present disclosure. The system 1000 for providing a task automation service, which is shown in FIG. 12, may include one or more processors 1100, a system bus 1600, a communication interface 1200, a memory 1400 for loading a computer program 1500 performed by the processor 1100, and a storage 1300 for storing the computer program 1500.

The processor 1100 controls the overall operation of each component of the system 1000 for providing a task automation service. The processor 1100 may perform computation for at least one application or program for executing methods/operations according to various embodiments of the present disclosure. The memory 1400 stores various types of data, commands and/or information. The memory 1400 may load one or more computer programs 1500 from the storage 1300 to execute the methods/operations according to various embodiments of the present disclosure. The system bus 1600 provides a communication function between components of the system 1000 for providing a task automation service. The communication interface 1200 supports Internet communication of the system 1000 for providing a task automation service. The storage 1300 may non-temporarily store one or more computer programs 1500. The computer program 1500 may include one or more instructions in which the methods/operations according to various embodiments of the present disclosure are implemented. When the computer program 1500 is loaded into the memory 1400, the processor 1100 may perform the methods/operations according to various embodiments of the present disclosure by executing the one or more instructions.

In some embodiments, the system 1000 for providing a task automation service, which is described with reference to FIG. 12, may be configured using one or more physical servers included in a server farm based on cloud technology such as a virtual machine. In this case, at least some of the processor 1100, the memory 1400 and the storage 1300 among the components shown in FIG. 12 may be virtual hardware, and the communication interface 1200 may be also configured with a virtualized networking element such as a virtual switch.

Embodiments of the present disclosure have been described above with reference to FIGS. 1 through 12, but it should be noted that the effects of the present disclosure are not limited to those described above, and other effects of the present disclosure should be apparent from the following description.

The technical features of the present disclosure described so far may be embodied as computer readable codes on a computer readable medium. The computer program recorded on the computer readable medium may be transmitted to other computing device via a network such as internet and installed in the other computing device, thereby being used in the other computing device.

Although operations are shown in a specific order in the drawings, it should not be understood that desired results can be obtained when the operations must be performed in the specific order or sequential order or when all of the operations must be performed. In certain situations, multitasking and parallel processing may be advantageous. In concluding the detailed description, those skilled in the art will appreciate that many variations and modifications can be made to the example embodiments without substantially departing from the principles of the present disclosure. Therefore, the disclosed example embodiments of the disclosure are used in a generic and descriptive sense only and not for purposes of limitation.

The protection scope of the present invention should be interpreted by the following claims.

## Claims

1. A method for providing a task automation service, performed by at least one computing device, the method comprising:
Collecting (S100) information on an object, in which a user's input occurs, by using a recording engine;
Generating (S200) an object information list for the object based on the information collected by the recording engine;
Determining (S300) first object information corresponding to the user's input based on a result of comparing a plurality of kinds of candidate object information included in the object information list; and
automatically generating (S400) an activity corresponding to the user's input based on the first object information and predefined pattern information,
**characterised in that**
the determining the first object information corresponding to the user's input includes:
selecting one kind of object information from the object information list;
determining whether the user's input corresponding to the selected object information is a continuous input for the object; and
determining the selected object information as candidate object information based on a result of the determination.

2. The method of claim 1, wherein the object information list includes user input information on the object and an object adjacent to the object.

3. The method of claim 1, wherein the object information list includes information on any one of an application, a system and a program, in which the user's input for the object is performed.

4. The method of claim 1, wherein the generating the object information list includes:
determining whether each of object information collected by the recording engine includes essential information set in advance; and
generating the object information list based on a result of the determination.

5. The method of claim 1, wherein the first object information includes a user input type for the object, a location of the object, a size of the object and process information on the object.

6. The method of claim 1, wherein whether the user's input is the continuous input for the object is determined based on whether objects, in which the user's input occurs, are the same.

7. The method of claim 1, wherein the determining the selected object information as the candidate object information is performed only when it is determined that the user's input is the continuous input for the object and it is determined that it is not necessary to wait for a user's next input.

8. The method of claim 7, wherein whether it is necessary to wait for the user's next input is determined based on a user's input type.

9. The method of claim 1, wherein the determining the selected object information as the candidate object information includes:
determining the object information as candidate object information, based on a result of determining whether it is necessary to wait for a user's next input when it is determined that the user's input is not the continuous input for the object.

10. The method of claim 1, wherein the first object information corresponding to the user's input is object information having a small object size among the plurality of kinds of candidate object information included in the object information list.

11. The method of claim 1, wherein the first object information corresponding to the user's input is determined based on process information on the object among the plurality of kinds of candidate object information included in the object information list.

12. The method of claim 1, wherein the automatically generating the activity corresponding to the user's input includes:
determining whether there is an activity of the same pattern as that of the activity; and
automatically generating an activity corresponding to the pattern based on a result of the determination.

13. The method of claim 12, wherein the pattern includes a combination of one or more activities including a user's input type, a number of inputs and information on the object in which the user's input occurs.

14. A system for providing a task automation service, the system comprising:
an object information collection module collecting information on an object, in which a user's input occurs, by using a recording engine and generating an object information list for the object based on the collected information;
an object information determination module determining first object information corresponding to the user's input based on a result of comparing a plurality of kinds of candidate object information included in the object information list; and
an activity generation module automatically generating an activity corresponding to the user's input based on the first object information and predefined pattern information,
**characterised in that** the object information determination module is further configured to:
select one kind of object information from the object information list;
determine whether the user's input corresponding to the selected object information is a continuous input for the object; and
determine the selected object information as candidate object information based on a result of the determination.

## Patentansprüche

1. Verfahren zum Bereitstellen eines
Aufgabenautomatisierungsdiensts, der durch mindestens eine Rechenvorrichtung durchgeführt wird, wobei das Verfahren umfasst:
Sammeln (S100) von Informationen über ein Objekt, in dem die Eingabe eines Benutzers erfolgt, durch Verwenden einer Aufzeichnungs-Engine;
Erzeugen (S200) einer Objektinformationsliste für das Objekt basierend auf den durch die Aufzeichnungs-Engine gesammelten Informationen;
Bestimmen (S300) erster Objektinformationen, die der Eingabe des Benutzers entsprechen, basierend auf einem Ergebnis des Vergleichens einer Vielzahl von Arten möglicher Objektinformationen, die in der Objektinformationsliste enthalten sind; und
automatisches Erzeugen (S400) einer Aktivität, die der Eingabe des Benutzers entspricht, basierend auf den ersten Objektinformationen und
vordefinierten Musterinformationen, **dadurch gekennzeichnet, dass**
das Bestimmen der ersten Objektinformationen, die der Eingabe des Benutzers entsprechen,
einschließt:
Auswählen einer Art von Objektinformationen aus der Objektinformationsliste;
Bestimmen, ob die Eingabe des Benutzers, die den ausgewählten Objektinformationen entspricht, eine kontinuierliche Eingabe für das Objekt ist; und
Bestimmen der ausgewählten Objektinformationen als mögliche Objektinformationen basierend auf einem Ergebnis der Bestimmung.

2. Verfahren nach Anspruch 1, wobei die Objektinformationsliste Benutzereingabeinformationen über das Objekt und ein Objekt angrenzend an das Objekt einschließt.

3. Verfahren nach Anspruch 1, wobei die Objektinformationsliste Informationen über ein beliebiges von einer Anwendung, einem System und einem Programm, in der/dem die Eingabe des Benutzers für das Objekt durchgeführt wird, einschließt.

4. Verfahren nach Anspruch 1, wobei das Erzeugen der Objektinformationsliste einschließt:
Bestimmen, ob jede der durch die Aufzeichnungs-Engine gesammelten Objektinformationen im Voraus festgelegte wesentliche Informationen einschließt; und
Erzeugen der Objektinformationsliste basierend auf einem Ergebnis der Bestimmung.

5. Verfahren nach Anspruch 1, wobei die ersten Objektinformationen einen Benutzereingabetyp für das Objekt, einen Ort des Objekts, eine Größe des Objekts und Prozessinformationen über das Objekt einschließen.

6. Verfahren nach Anspruch 1, wobei basierend darauf, ob Objekte, in denen die Eingabe des Benutzers erfolgt, gleich sind, bestimmt wird, ob die Eingabe des Benutzers die kontinuierliche Eingabe für das Objekt ist.

7. Verfahren nach Anspruch 1, wobei das Bestimmen der ausgewählten Objektinformationen als die möglichen Objektinformationen nur durchgeführt wird, wenn bestimmt wird, dass die Eingabe des Benutzers die kontinuierliche Eingabe für das Objekt ist, und bestimmt wird, dass es nicht erforderlich ist, auf die nächste Eingabe eines Benutzers zu warten.

8. Verfahren nach Anspruch 7, wobei basierend auf dem Eingabetyp eines Benutzers bestimmt wird, ob es erforderlich ist, auf die nächste Eingabe des Benutzers zu warten.

9. Verfahren nach Anspruch 1, wobei das Bestimmen der ausgewählten Objektinformationen als die möglichen Objektinformationen einschließt:
Bestimmen der Objektinformationen als mögliche Objektinformationen basierend auf einem Ergebnis des Bestimmens, ob es erforderlich ist, auf die nächste Eingabe eines Benutzers zu warten, wenn bestimmt wird, dass die Eingabe des Benutzers nicht die kontinuierliche Eingabe für das Objekt ist.

10. Verfahren nach Anspruch 1, wobei die ersten Objektinformationen, die der Eingabe des Benutzers entsprechen, Objektinformationen mit einer kleinen Objektgröße aus der Vielzahl von Arten möglicher Objektinformationen, die in der Objektinformationsliste enthalten sind, sind.

11. Verfahren nach Anspruch 1, wobei die ersten Objektinformationen, die der Eingabe des Benutzers entsprechen, basierend auf Prozessinformationen über das Objekt aus der Vielzahl von Arten möglicher Objektinformationen, die in der Objektinformationsliste enthalten sind, bestimmt werden.

12. Verfahren nach Anspruch 1, wobei das automatische Erzeugen der Aktivität, die der Eingabe des Benutzers entspricht, einschließt:
Bestimmen, ob es eine Aktivität mit demselben Muster wie dem der Aktivität gibt; und
automatisches Erzeugen einer Aktivität, die dem Muster entspricht, basierend auf einem Ergebnis der Bestimmung.

13. Verfahren nach Anspruch 12, wobei das Muster eine Kombination aus einer oder mehreren Aktivität(en) einschließt, die den Eingabetyp eines Benutzers, eine Anzahl von Eingaben und Informationen über das Objekt, in dem die Eingabe des Benutzers erfolgt, einschließt/einschließen.

14. System zum Bereitstellen eines
Aufgabenautomatisierungsdiensts, wobei das System umfasst:
ein Objektinformationssammlungsmodul, das Informationen über ein Objekt, in dem die Eingabe eines Benutzers erfolgt, sammelt, indem es eine Aufzeichnungs-Engine verwendet und eine Objektinformationsliste für das Objekt basierend auf den gesammelten Informationen erzeugt;
ein Objektinformationsbestimmungsmodul, das erste Objektinformationen, die der Eingabe des Benutzers entsprechen, basierend auf einem Ergebnis des Vergleichens einer Vielzahl von Arten möglicher Objektinformationen, die in der Objektinformationsliste enthalten sind, bestimmt; und
ein Aktivitätserzeugungsmodul, das automatisch eine Aktivität, die der Eingabe des Benutzers entspricht, basierend auf den ersten Objektinformationen und vordefinierten Musterinformationen, erzeugt, **dadurch gekennzeichnet, dass**
das Objektinformationsbestimmungsmodul ferner konfiguriert ist zum:
Auswählen einer Art von Objektinformationen aus der Objektinformationsliste;
Bestimmen, ob die Eingabe des Benutzers, die den ausgewählten Objektinformationen entspricht, eine kontinuierliche Eingabe für das Objekt ist; und Bestimmen der ausgewählten Objektinformationen als mögliche Objektinformationen basierend auf einem Ergebnis der Bestimmung.

## Revendications

1. Procédé pour fournir un service d'automatisation de tâches, mis en œuvre par au moins un dispositif informatique, le procédé comprenant :
le fait (S100) de collecter des informations sur un objet, dans lequel une entrée utilisateur se produit, en utilisant un moteur d'enregistrement ;
le fait (S200) de générer une liste d'informations d'objet pour l'objet sur la base des informations collectées par le moteur d'enregistrement ;
le fait (S300) de déterminer une première information d'objet correspondant à l'entrée utilisateur sur la base d'un résultat de comparaison d'une pluralité de types d'informations d'objet candidates incluses dans la liste d'informations d'objet ; et
le fait (S400) de générer automatiquement une activité correspondant à l'entrée utilisateur sur la base de la première information d'objet et d'informations de modèle prédéfinies, **caractérisé en ce que**
la détermination de la première information d'objet correspondant à l'entrée utilisateur comprend :
le fait de sélectionner un type d'informations d'objet dans la liste d'informations d'objet ;
le fait de déterminer si l'entrée utilisateur correspondant aux informations d'objet sélectionnées est une entrée continue pour l'objet ; et
le fait de déterminer les informations d'objet sélectionnées comme étant des informations d'objet candidates sur la base d'un résultat de la détermination.

2. Procédé selon la revendication 1, dans lequel la liste d'informations d'objet comprend des informations d'entrée utilisateur sur l'objet et un objet adjacent à l'objet.

3. Procédé selon la revendication 1, dans lequel la liste d'informations d'objet comprend des informations sur l'un quelconque parmi une application, un système et un programme dans lequel l'entrée utilisateur pour l'objet est mise en œuvre.

4. Procédé selon la revendication 1, dans lequel la génération de la liste d'informations d'objet comprend :
le fait de déterminer si chacune des informations d'objet collectées par le moteur d'enregistrement comprend des informations essentielles définies à l'avance ; et
le fait de générer la liste d'informations d'objet sur la base d'un résultat de la détermination.

5. Procédé selon la revendication 1, dans lequel la première information d'objet comprend un type d'entrée utilisateur pour l'objet, un emplacement de l'objet, une taille de l'objet et des informations de traitement sur l'objet.

6. Procédé selon la revendication 1, dans lequel le point de savoir si l'entrée utilisateur est l'entrée continue pour l'objet est déterminé selon le fait que les objets, dans lesquels l'entrée utilisateur se produit, sont les mêmes.

7. Procédé selon la revendication 1, dans lequel la détermination des informations d'objet sélectionnées en tant qu'informations d'objet candidates est mise en œuvre uniquement lorsqu'il est déterminé que l'entrée utilisateur est l'entrée continue pour l'objet et qu'il est déterminé qu'il n'est pas nécessaire d'attendre une entrée utilisateur suivante.

8. Procédé selon la revendication 7, dans lequel le point de savoir s'il est nécessaire d'attendre l'entrée utilisateur suivante est déterminée sur la base d'un type d'entrée utilisateur.

9. Procédé selon la revendication 1, dans lequel la détermination des informations d'objet sélectionnées en tant qu'informations d'objet candidates comprend :
le fait de déterminer les informations d'objet en tant qu'informations d'objet candidates, sur la base d'un résultat de la détermination du point de savoir s'il est nécessaire d'attendre une entrée utilisateur suivante lorsqu'il est déterminé que l'entrée utilisateur n'est pas l'entrée continue pour l'objet.

10. Procédé selon la revendication 1, dans lequel la première information d'objet correspondant à l'entrée utilisateur est une information d'objet ayant une petite taille d'objet parmi la pluralité de types d'informations d'objet candidates incluses dans la liste d'informations d'objet.

11. Procédé selon la revendication 1, dans lequel la première information d'objet correspondant à l'entrée utilisateur est déterminée sur la base d'informations de processus sur l'objet parmi la pluralité de types d'informations d'objet candidates incluses dans la liste d'informations d'objet.

12. Procédé selon la revendication 1, dans lequel la génération automatique de l'activité correspondant à l'entrée utilisateur comprend :
le fait de déterminer s'il existe une activité du même modèle que celui de l'activité ; et
le fait de générer automatiquement une activité correspondant au modèle sur la base d'un résultat de la détermination.

13. Procédé selon la revendication 12, dans lequel le modèle comprend une combinaison d'une ou plusieurs activités comprenant un type d'entrée utilisateur, un nombre d'entrées et des informations sur l'objet dans lequel l'entrée utilisateur se produit.

14. Système pour fournir un service d'automatisation de tâches, le système comprenant :
un module de collecte d'informations sur un objet qui collecte des informations sur un objet dans lequel une entrée utilisateur se produit, en utilisant un moteur d'enregistrement et en générant une liste d'informations d'objet pour l'objet sur la base des informations collectées ;
un module de détermination d'informations sur l'objet qui détermine la première information d'objet correspondant à l'entrée utilisateur sur la base d'un résultat de comparaison d'une pluralité de types d'informations d'objet candidates inclus dans la liste d'informations d'objet ; et
un module de génération d'activités qui génère automatiquement une activité correspondant à l'entrée utilisateur sur la base de la première information d'objet et d'informations de modèles prédéfinis, **caractérisé en ce que** le module de détermination d'informations d'objet est en outre configuré pour :
sélectionner un type d'informations d'objet dans la liste d'informations d'objet ;
déterminer si l'entrée utilisateur correspondant aux informations d'objet sélectionnées est une entrée continue pour l'objet ; et
déterminer les informations d'objet sélectionnées comme étant des informations d'objet candidates sur la base d'un résultat de la détermination.
